# EUROPÄISCHE PATENTSCHRIFT

(11) **EP 1 560 310 B1**
(45) Veröffentlichungstag und Bekanntmachung des Hinweises auf die Patenterteilung: **04.03.2015**
(21) Anmeldenummer: 05000263.3
(22) Anmeldetag: 07.01.2005
(51) Int. Cl.: H02G 1/12

(54) **Abisolierzange**
Stripping pliers
Pince à dénuder

(30) Priorität: 02.02.2004 DE 202004001580 U; 23.09.2004 DE 202004014801 U
(43) Veröffentlichungstag der Anmeldung: 03.08.2005
(73) Patentinhaber: Weidmüller Interface GmbH & Co. KG, 32758 Detmold (DE)
(72) Erfinder: Schmode, Hartmut, 32825 Blomberg (DE); Hanning, Günter, 32758 Detmold (DE); Hetland, Detlev, 32760 Detmold (DE); Heggemann, Christian, 32758 Detmold (DE); Köster, Thomas, 33189 Schlangen (DE)
(74) Vertreter: Dantz, Jan Henning

(56) Entgegenhaltungen:
- EP-A- 1 174 969
- US-A- 2 889 728
- US-A- 3 226 815

## Beschreibung

Die Erfindung betrifft eine Abisolierzange nach dem Oberbegriff des Anspruchs 1

Eine Abisolierzange ist aus der DE 79 33 957 U1 bekannt. Die Zange arbeitet mit zwei Klemmbacken und zwei Abisoliermessern. Die Mechanik ist ziehend ausgelegt, d.h., je eine Klemmbacke und ein Isoliermesser werden bei einer Betätigung gegen eine feststehende Klemmbacke und ein feststehendes Abisoliermesser gezogen. Die bewegliche Klemmbacke und das Abisoliermesser sind nicht gekoppelt, so dass sich die bewegliche Klemmbacke und das Abisoliermesser unabhängig voneinander an den Leiter anlegen können.

Es ist auch bekannt, zwei Messeranordnungen mit je zwei Abisoliermessern an Abisolierzangen zu realisieren, die "Rücken an Rücken" bzw. mit ihren Schneidbereichen aneinanderliegend angeordnet sind, was bei bestimmten Leitern von Vorteil sein kann, da keine Abdrücke der Klemmbacken hinterlassen werden, welche u.U. sogar den Leiter beschädigen könnten und da ein Durchrutschen des Leiters durch die sehr scharfen Messer sicherer verhindert wird. Andererseits ist das Durchtrennen mit den Rücken an Rücken liegenden zwei Messeranordnungen aus je zwei Abisoliermessern nicht immer vorteilhaft, denn es kann zu unsauberen Schneidresultaten führen. An bekannten Zangen dieser Bauart ist zudem nachteilig, dass diese einen weitgehend asymmetrischen Aufbau aufweisen, was die Herstellung aufgrund der benötigten Teilevielfalt verteuert und den Benutzer die Handhabung als weniger angenehm empfinden lässt.

Desweiteren ist aus der EP 1 174 969 A1 eine Abisolierzange mit zwei Klemmbacken und zwei Abisoliermessern und einer ziehenden Mechanik bekannt, bei der die Klapphebel, an denen die Klemmbacken und die Abisoliermesser angeordnet sind, gegeneinander verschiebbar sind.

Mit der Erfindung soll eine Abisolierzange geschaffen werden, mit welcher bei angenehmer Handhabung auf einfache Weise ein Toleranzausgleich von Leiterdurchmessem realisierbar sein soll. Vorzugsweise soll alternativ sowohl eine Auslegung mit zwei Klemmbacken und zwei Abisoliermessern als auch eine Anordnung mit zwei aneinanderliegenden Messeranordnungen mit je zwei Abisoliermessern realisierbar sein.

Die Erfindung löst diese Aufgabe durch den Gegenstand des Anspruchs 1. Danach sind jeweils das weitere Abisoliermesser bzw. die korrespondierende Klemmbacke an der Basis unter der Wirkung jeweils einer L-förmig ausgebildeten Feder mit etwas Spiel an den Klapphebeln angeordnet, welches derart ausgelegt ist, dass Leitertoleranzen beim Klemmen eines Leiters und oder beim Abtrennen des Isolierungsendes federnd ausgleichbar sind, wobei die Klapphebel jeweils aus einem vorderen Klapphebelblech und einem damit deckungsgleichen hinteren Klapphebelblech bestehen, zwischen denen ein Spalt ausgebildet ist und wobei in den Spalt zwischen den Klapphebelblechen bewegliche Befestigungsstücke für die oberen Halter eingesetzt sind, an denen sich einerseits jeweils Federn - insbesondere Schraubenfedern - abstützen, welche einerseits die Klemmbacke und das Abisoliermesser in den Langlöchern in Richtung der weiteren Klemmbacke bzw. des weiteren Abisollermessers drücken und an denen sich andererseits die L-förmigen Federn abstützen.

Da sich auch Leiter mit laut Herstellerangabe gleichem Querschnitt individuell etwas unterscheiden, da z.B. ein-, fein- oder mehrdrähtige Leiter einen etwas unterschledlichen Durchmesser aufweisen, wirkt sich die zusätzliche "federnde" Anordnung auch der oberen Klemmbacke und des oberen Abisoliermessers oder zwei Abisoliermesser vorteilhaft "toleranzausgleichend" aus.

Derart ist es überraschend möglich, die Vorteile einer Klemmbackenanordnung und einer Abisoliermesseranordnung miteinander zu kombinierten, denn einerseits ist es vorteilhaft, den Leiter nur mit einem Abisoliermesserpaar zu schneiden, um einen unsauberen Doppelschnitt zu vermeiden und andererseits ist es vorteilhaft, den Leiter mit einer Klemmbackenpaar definiert zu halten, wobei aber nach dem Stand der Technik der nicht gegebene Toleranzausgleich für Leiter angeblich gleichen Querschnitts problematisch war. Diese Probleme löst die Erfindung auf einfache und wirksame Weise. Dabei zeichnet sich die Zange auch durch eine angenehme Handhabung aus.

Mit der Erfindung sind theoretisch auch zwei Messeranordnungen mit je zwei beweglichen und zwei feststehenden Abisoliermessern oder aber - besonders bevorzugt - eine Klemmbackenanordnung mit zwei Klemmbacken und eine Messeranordnung mit zwei Abisoliermessern realisierbar.

Vorteilhafte Ausgestaltungen und Weiterbildungen der Erfindung sind den Unteransprüchen entnehmbar.

Nachfolgend wird die Erfindung anhand von Ausführungsbeispielen unter Bezug auf die Zeichnung näher erläutert. Es zeigt:
- Fig. 1- 3: eine erste Abisolierzange in einer Draufsicht in drei Betätigungsstellungen;
- Fig. 4-6: die Abisolierzange aus Fig. 1 in den gezeigten drei Betätigungsstellungen bei abgenommenen oberer Klapphebelblechen und Betätigungshebelblechen und ohne Ummantelungen der Handhebel;
- Fig. 7, 8: perspektivische Ansichten des Zangenkopfes aus Fig. 1 in zwei verschiedenen Betriebsstellungen;
- Fig. 9, 10: eine Seitenansicht und eine perspektivische Ansicht des Zangenkopfes aus Fig. 1 während des Abisolierens eines Leiters;
- Fig. 11: eine Sprengansicht des einen Handhebels aus Fig. 1 nebst Basis;
- Fig. 12: eine Sprengansicht des einen Klapphebels aus Fig. 1;
- Fig. 13-15: die Schneid- und Klemmmesser aus Fig. 1 nebst Haltern in einer Einzelansicht während der drei Betriebsstellungen aus Fig. 1;
- Fig. 16-17: Sprengansichten der Schneidmesser aus Fig. 1;
- Fig. 18,19: eine weitere Abisolierzange in einer Seitenansicht in zwei Betätigungsstellungen;
- Fig. 20a,b: zwei verschiedene perspektivische Anschichten eines Ausschnitts des Zangenkopfes aus Fig. 19 und 20 in geöffneter Stellung mit eingelegtem Leiter;
- Fig. 21 a-d: weitere Seitenansichten und perspektivische Ansichten des Zangenkopfes der Zange aus Fig. 18; und
- Fig. 22a,b: Sprengansichten der Schneidmesser und Klemmbacken der Zange aus Fig. 18 bis 21.

In der nachfolgenden Figurenbeschreibung beziehen sich Begriffe wie "oben", "unten", links", "rechts", "vorne" und "hinten" usw. ausschließlich auf die in den jeweiligen Figuren gewählte beispielhafte Darstellung und Position der Zange. Diese Begriffe sind nicht einschränkend zu verstehen, d.h. in verschiedenen Arbeitsstellungen oder durch spiegelsymmetrische Auslegung oder dgl. können sich diese Bezüge ändern.

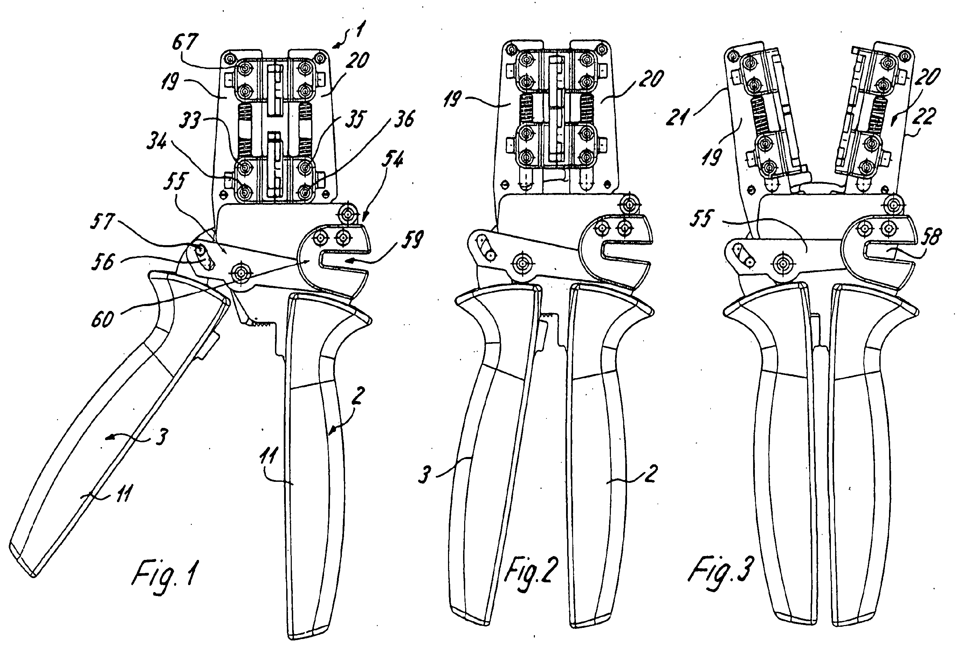

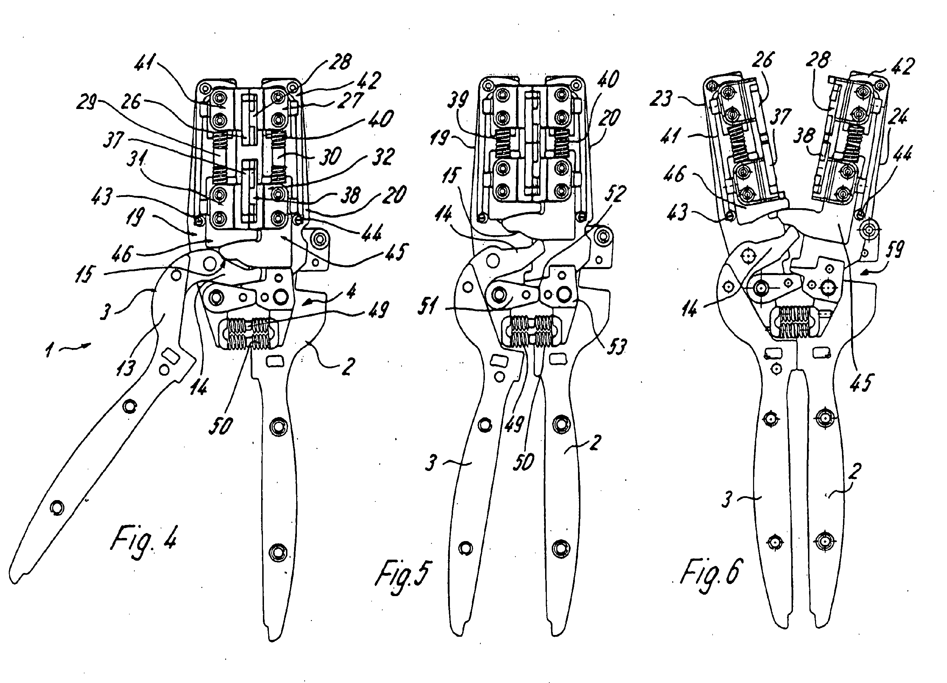

Fig. 1 bis 6 zeigen eine Abisolierzange 1 mit zwei Handhebeln 2, 3. Der eine Handhebel 2 - in Fig. 1 und 3 der rechte - der beiden Handhebel ist unbeweglich direkt mit einer Basis 4 verbunden und/oder ausgebildet, wohingegen der andere Handhebel 3 ― in Fig. 1 und 4 der linke - schwenkbar an der Basis 4 gelagert ist.

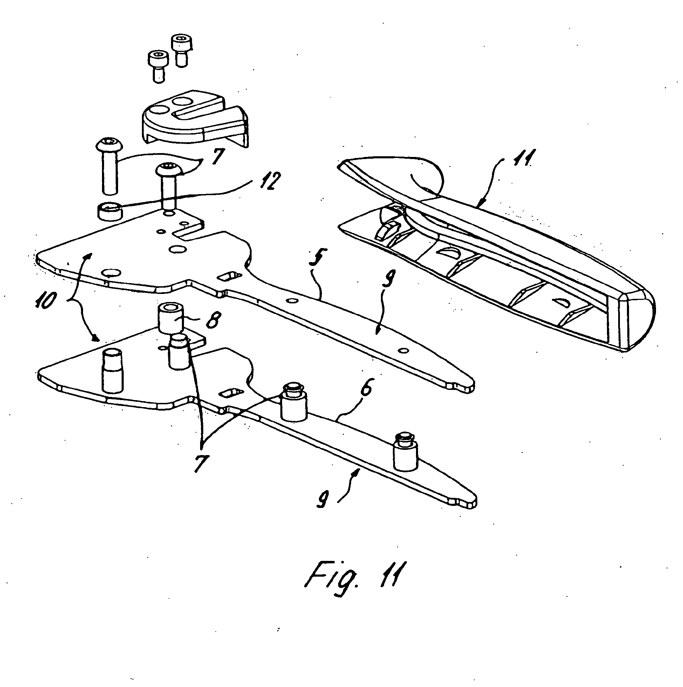

Die Handhebel bestehen - wie z.B. in Fig 11 zu erkennen - jeweils aus zwei Blechen 5, 6, zwischen denen ein Luftspalt besteht und die parallel zueinander ausgerichtet und mittels Bolzen 7 und Distanzhülsen 8 voneinander beabstandet sind. Die Bleche 5, 6 bestehen wiederum jeweils aus einem Griffabschnitt 9 und einem Basisabschnitt 10, wobei die Griffabschnitte 9 in montierter Stellung der Fig. 1 - 3 mit einer Griffschale 11 - insbesondere aus Kunststoff - versehen sind. Auf einen der Bolzen 7 ist eine Lagerbuchse 12 aufgesetzt.

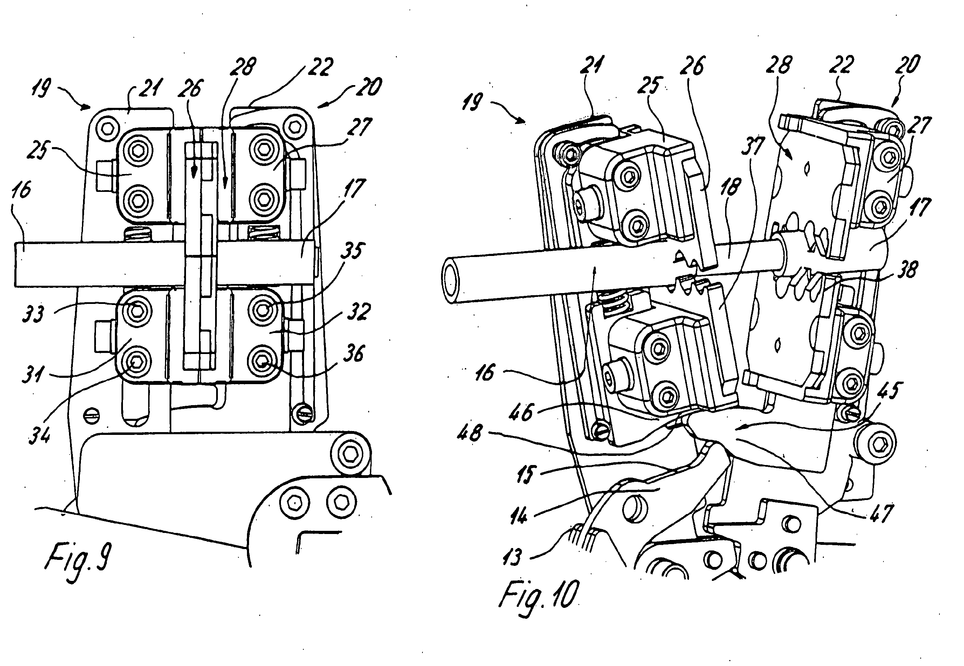

Der zweite schwenkbare Handhebel 3 besteht aus mehreren aufeinandergelegten Blechen 13 (siehe z.B. Fig. 10), die an der Basis 4 zwischen den Basisabschnitten 10 der Bleche 5, 6 schwenkbar gelagert sind. Eines der Bleche 13 des schwenkbaren Handhebels 3 weist an seinem dem eigentlichen Griffabschnitt gegenüberliegenden Ende einen Vorsprung 14 auf, der an einer steuerkurvenartigen Seitenkante 15 anliegt (wird weiter unten noch näher beschrieben).

Die Handhebel 2, 3 dienen der Betätigung mittels einer Hand, mit welcher der zweite Handhebel 3 in Richtung des ersten Handhebels 2 gezogen wird, wobei zunächst die Isolierung eines Leiters 16 durchschnitten und dann das abgetrennte Isolierungsende 17 vom übrigen Leiter bzw. von dessen Leitungsader(n) 18 abgeschoben wird.

Auf der Basis 4 sind zu diesem Zweck schwenkbar zwei Klapphebel 19, 20 gelagert, welche die eigentlichen Funktionselemente zur Realisierung der Klemm- und/oder Abisolierfunktion tragen.

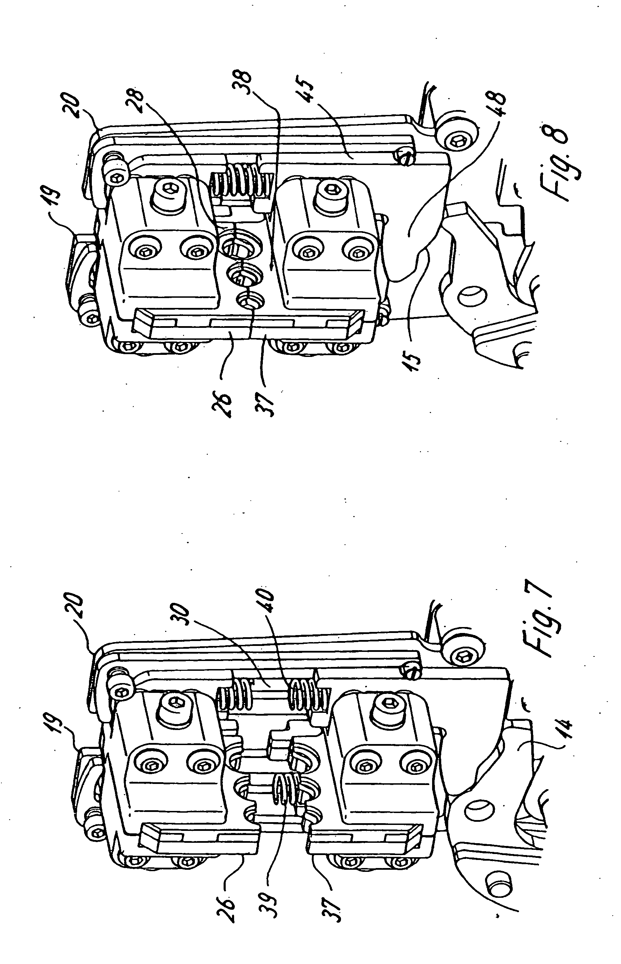

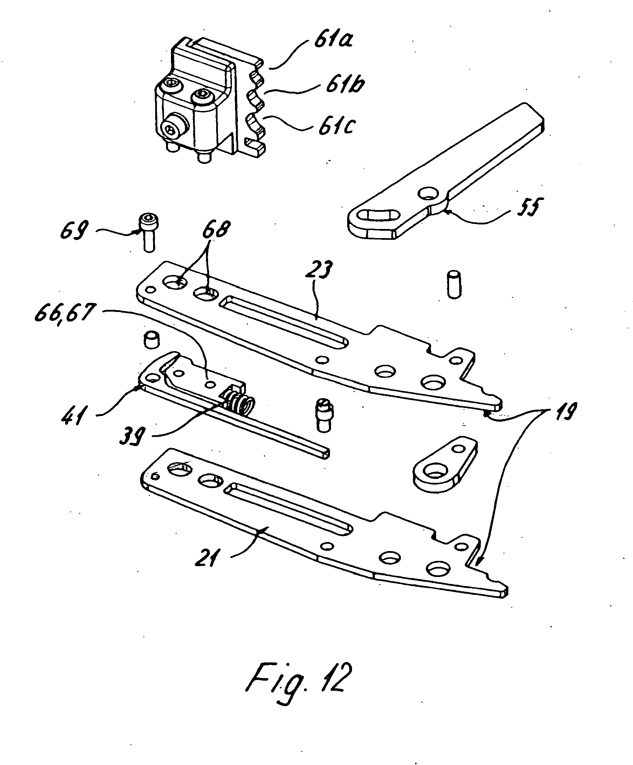

Die Klapphebel 19, 20 bestehen nach Fig. 12 jeweils aus einem vorderen Klapphebelblech 21, 22 und einem damit deckungsgleichen hinteren Klapphebelblech 23, 24, zwischen denen ein Spalt ausgebildet ist (siehe z.B. Fig. 8b).

In den unteren, den Handhebeln 2, 3 zugewandten Bereichen der beiden Klapphebel 19, 20 ist jeweils ein kulissenartiges Langloch 29, 30 ausgebildet, in denen jeweils ein weiterer Aufnahmewinkel bzw. Halter 31, 32 an je zwei Schiebebolzen 33, 34; 35, 36 verschieblich geführt ist (siehe Fig. 2a).

Dabei ist an dem in Fig. 1 bis 6 linken Klapphebel 19 in seinem oberen, von den Handhebeln 2, 3 abgewandten Bereich ein erster wechselbarer, winkelartiger Halter 25 fixiert(z.B. festgeschraubt), der eine erste feststehende Klemmbacke 26 trägt und im entsprechenden Bereich am zweiten Klapphebel 20 ist ein zweiter winkelförmiger Halter 27 (z.B. festgeschraubt) befestigt, an welchem ein erstes, feststehendes Abisoliermesser 28 befestigt ist.

An dem unteren, beweglichen Halter 31 des hier linken ersten Klapphebels 19 ist eine zweite, untere Klemmbacke 37 befestigt und an dem unteren Aufnahmewinkel 32 an dem hier rechten zweiten Klapphebel 20 ein zweites, unteres Abisoliermesser 38. Die unteren Klemmbacke 37 und das untere Abisoliermesser 38 sind damit beweglich bzw. hier verschieblich geführt, wohingegen die erste Klemmbacke 26 als oberer fixer Leiteranschlag für den Leiter 16 und das obere Abisoliermesser 28 als Widerlager und Gegenfunktionselement beim Durchtrennen der Leiterisolierung dienen.

In den Spalt zwischen den Klapphebelblechen 21, 22 bzw. 23, 24 sind bewegliche, blechartige Befestigungsstücke 66, 67 eingesetzt, an denen sich jeweils Federn - hier Schraubenfedern 39, 40 - abstützen, welche die Klemmbacke 37 und das Abisoliermesser 38 in den Langlöchern 29, 30 nach unten in Richtung der weiteren Klemmbakke 37 bzw. des weiteren Abisoliermessers 38 drücken.

Die Befestigungsstücke 66, 67 (Fig. 12 und 1) dienen jeweils zur Aufnahme (z.B. zum Anschrauben der Halter 25, 27 der oberen Klemmbacke 26 bzw. des oberen Abisoliermesser 38 durch Bohrungen 68 der Klapphebelbleche hindurch. Da die Bohrungen 68 für die Schrauben 69 (Fig. 1) für die Halter 35, 36 einen etwas größeren Durchmesser als die Schrauben 69 aufweisen, sind somit die oberen Halter 25, 27 und damit das obere Abisoliermesser 28 und die obere Klemmbacke 26 an den Klapphebeln 19, 20 jeweils begrenzt beweglich angeordnet.

Die obere Klemmbacke 26 und das obere Abisoliermesser 28 sind derart mit etwas Spiel in den entsprechenden Bohrungen 68 der Klapphebelbleche 21, 22 gelagert. Dabei wirken auf sie bzw. hier die Befestigungsstücke 66, 67 jeweils von oben her Federn 41, 42 ein, die hier eine L-Form aufweisen. Der jeweils kurze Schenkel der im Endbereich befestigten und gelagerten L-förmigen Federn 41, 42 wirkt auf die Oberseite bzw. die von den Langlöchern 29, 30 abgewandte Seite der oberen Klemmbacke 26 bzw. des oberen Abisoliermessers 28 bzw. - besser - des jeweiligen Befestigungsstückes 66 ein. Die Längsschenkel der L-förmigen Federn 41, 42 verlaufen dagegen an den Außenseiten der Halter 25, 27 auf dem jeweiligen Klapphebelblech 21, 22 in Richtung der Handhebel 2, 3 und stützen sich mit ihren Enden an verstellbaren Exzenterstiften 43, 44 ab, mit denen die Federvorspannung auf einfache Weise durch Verdrehen der Exzenterstifte 43, 44 einstellbar ist.

Zwischen die unteren Halter 31, 32 und die oder zwischen die Klapphebelbleche 21 - 24 sind hier noch weitere Steuerbleche 45, 46 gesetzt, welche sich in Richtung der Handhebel nach unten erstreckende, ineinandergreifende Ansätze 47, 48 aufweisen, wobei der Vorsprung 14 des schwenkbaren Handhebels 3 mit seinem freien Ende an dem unteren Steuerblech 45 anliegt.

Zwischen den Handhebel 2, 3 ist/sind noch wenigstens eine - hier zwei Schraubenfeder(n) 49, 50 angeordnet, welche dazu dienen, die Klapphebel 2, 3 nach dem Auseinanderklappen wieder in die parallele Ausgangslage zu drücken.

Die Funktion dieser Anordnung ist wie folgt.

Zunächst wird ein Leiter zwischen die Klemmbacken 26, 37 und die Abisoliermesser 28, 38 gelegt(Fig. 1 und 4) und dann werden die beiden Handhebel 2, 3 zusammengedrückt. Dabei drückt der Vorsprung 14 die Ansätze 47, 48 an den Steuerblechen 45, 46 (die auch direkt an die Halter 31, 32 angeformt sein können) in den Langlöchern 29, 30 von den Handhebeln 2, 3 weg nach oben, wobei die Schraubenfedern 39, 40 zusammengedrückt werden. Dabei wird ferner der Leiter 16 von den Klemmbacken 26, 37 geklemmt und die Isolierung des Leiters 16 wird eingeschnitten (Fig. 9).

Bei fortgesetzter Betätigung des Handhebels 2 bewegen sich die Klapphebel 19, 20, die an der Basis 4 angelenkt sind, voneinander weg, da ein unbeweglicher Ausleger 51 des einen Klapphebels 19 mit einer weiteren Steuerkurve 52 hier eines weiteren Steuerbleches 53 am weiteren Klapphebel 20 zusammenwirkt, wobei der Ausleger 51 und diese Steuerkurve derart gestaltet sind, dass sich die Klapphebel 19, 20 beim weiteren Zusammendrücken der Handhebel 2, 3 voneinander fort bewegen bzw. öffnen. Dabei wird das Isolierungsende 17 vom Leiter 16 abgezogen (Fig. 10).

Die Öffnungsbewegung der Klemmbacken 26, 37 und der Abisoliermesser 28, 38 erfolgt aufgrund der Geometrie der steuerkurvenartigen Seitenkante 15 des einen Steuerbleches 45 vor dem Öffnen der Handhebel 2, 3. Hierbei wirken die Schraubenfedern 39, 40 auf die untere Klemmbacke 37 und das untere Abisoliermesser und schieben diese in ihre Ausgangslage zurück. Die Druckfedern 49, 50 unterstützen hierbei auch die Öffnungsbewegung der Handhebel 2, 3.

Dadurch, dass das obere Abisoliermesser 28 und insbesondere auch die obere Klemmbacke 26 federnd mit etwas Spiel an den Klapphebel 19, 20 angeordnet sind, ist auf einfache Weise trotz des vermeintlich problematischen Einsatzes einer Klemmbackenanordnung eine Anpassung an die individuelle Leitergeometrie möglich.

Dabei weisen zunächst sowohl die Klemmbacken 26, 37 als auch die Abisoliermesser senkrecht zur "Zangenebene" bzw. hier der Bildebene der Fig. 1 mehrere Ausnehmungen 61a, b, ... sowie 62a, b, ... unterschiedlicher Größe bzw. unterschiedlichen Durchmessers auf. Damit ist eine Anpassung an den verwendeten Leiterquerschnitt möglich.

Da sich auch Leiter 16 mit laut Herstellerangabe gleichem Querschnitt individuell etwas unterscheiden, da z.B. ein- oder mehrdrahtige Leiter einen etwas unterschiedlichen Durchmesser aufweisen, wirkt sich die zusätzliche "federnde" Anordnung auch der oberen Klemmbacke 26 und des oberen Abisoliermessers 38 toleranzausgleichend aus.

Theoretisch ist es auch denkbar, in die Halter zwei Abisoliermesserpaare einzusetzen. Die Ausbildung mit einem Klemmbackenpaar und einem Abisoliermesserpaar wird aber deutlich bevorzugt.

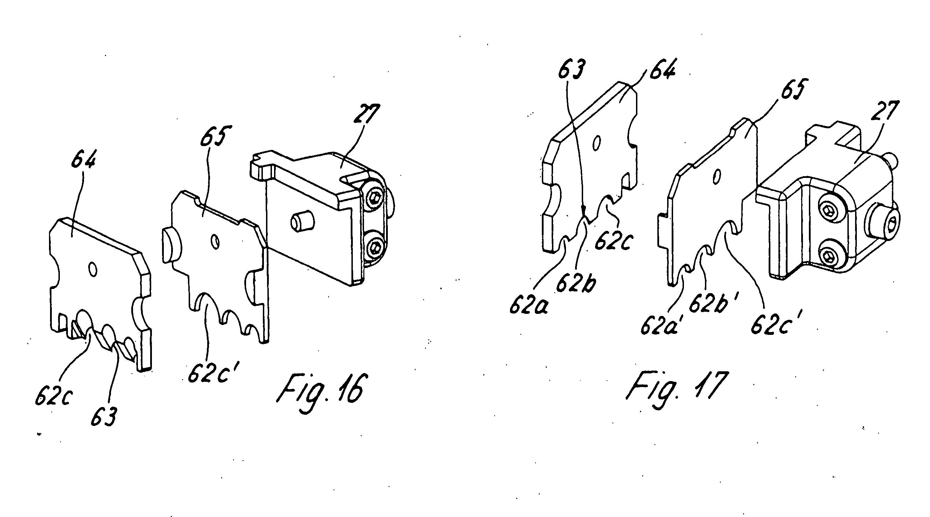

Fig. 16 zeigt noch, dass jedes oder wenigstens eins der Abisoliermesser 28, 38 auch besonders vorteilhaft (bzw. nach einer auch unabhängig betrachtbaren Variante)mehrteilig aufgebaut sein kann. So kann es aus zwei Blechlagen 64, 65 bestehen, von denen die eine die eigentlichen Schneidkanten 63 aufweist und die andere korrespondierende Ausnehmungen 62a', 62b' zu den Ausnehmungen 62a, 62b, .. der Lage 64 bzw. des eigentlichen Abisoliermesser, die den Leiter führen und positionieren.

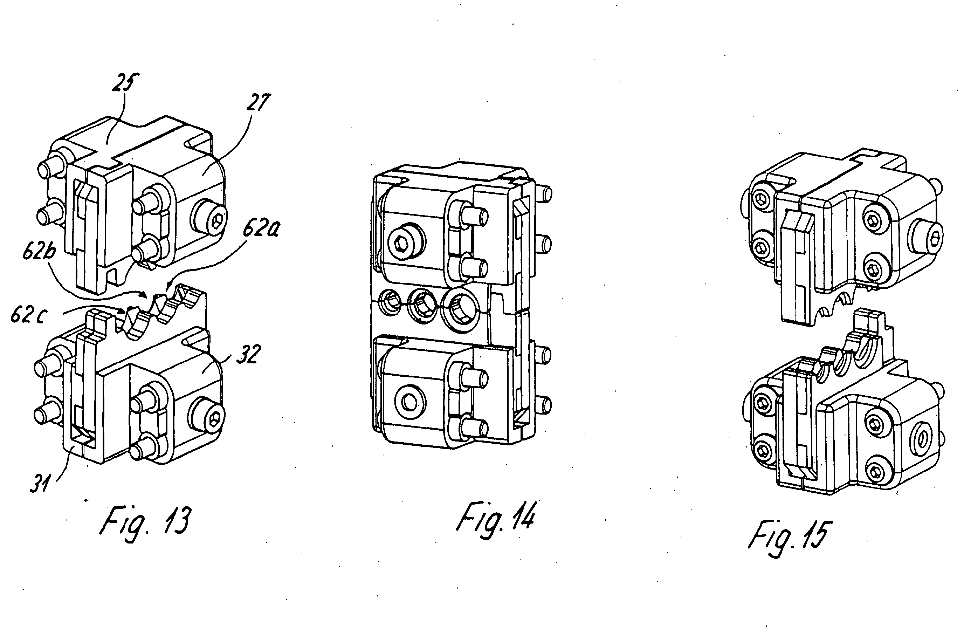

Die Ausnehmungen 61a, 61b, ... der Klemmbacken bzw. wenigstens einer der Klemmbacken und/oder die Ausnehmungen 62a, 62b, der Abisoliermesser können eine Halbkreisform aufweisen oder besonders vorteilhaft (bzw. nach einer auch unabhängig betrachtbaren Variante) abschnittsweise auch eine sich stärker verjüngende Geometrie (z.B. eine spitzwinklig Formgebung, siehe Fig. 13 - 16), um derart den Zentriervorgang des Leiters vorteilhaft zu beeinflussen und Räume für die Leiterisolierung zu schaffen (unterhalb der Vorsprünge).

Die Zange ist zwar insbesondere hinsichtlich der Handhebel 2, 3 nicht vollständig symmetrisch, zeichnet sich aber auch durch ein einer symmetrischen Zange vergleichbares, angenehmes Betätigungsgefühl aus.

Wie weiter in Fig. 1 und 11 besonders gut zu erkennen, ist in die Abisolierzange auch eine Schneidvorrichtung 54 integriert.

Diese Schneidvorrichtung 54 ist unterhalb des unteren Abisoliermessers 38 angeordnet. Sie weist ein Schneidmesser 55 auf, das gelenkig an der Basis 4 gelagert ist und an seinem einen Ende ein gekrümmtes Langloch 56 aufweist, in das ein Stift 57 am zweiten Handhebel 3 eingreift. Bein Zusammendrücken der Handhebel 1,3 verfährt der Stift 57 im Langloch 56, bis er schließlich an dessen Ende zur Anlage kommt und dann das Schneidmesser 55 auf der Basis 4 verschwenkt, so dass ein freies Ende 58 des Schneidmessers 55 einen Leiter durchtrennen kann, der in eine seitliche Ausnehmung 59 an der Basis eingelegt wird. In die Basis ist hier ein Messerschutz 60 aus Kunststoff in U-Form eingeklemmt, der den Benutzer zwar schützt aber das Schneiden der Leiter 16 nicht behindert.

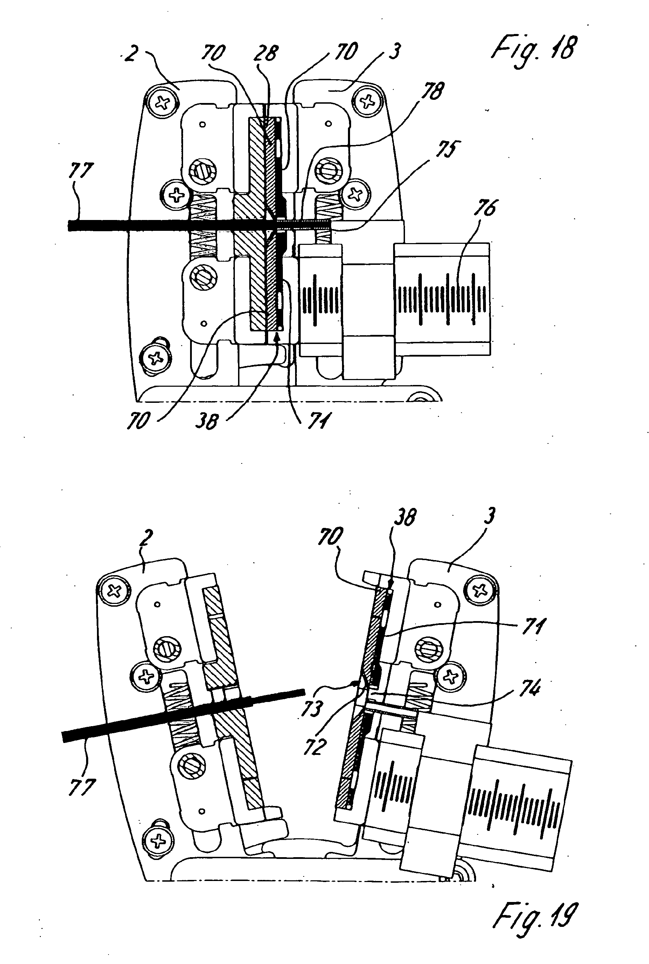

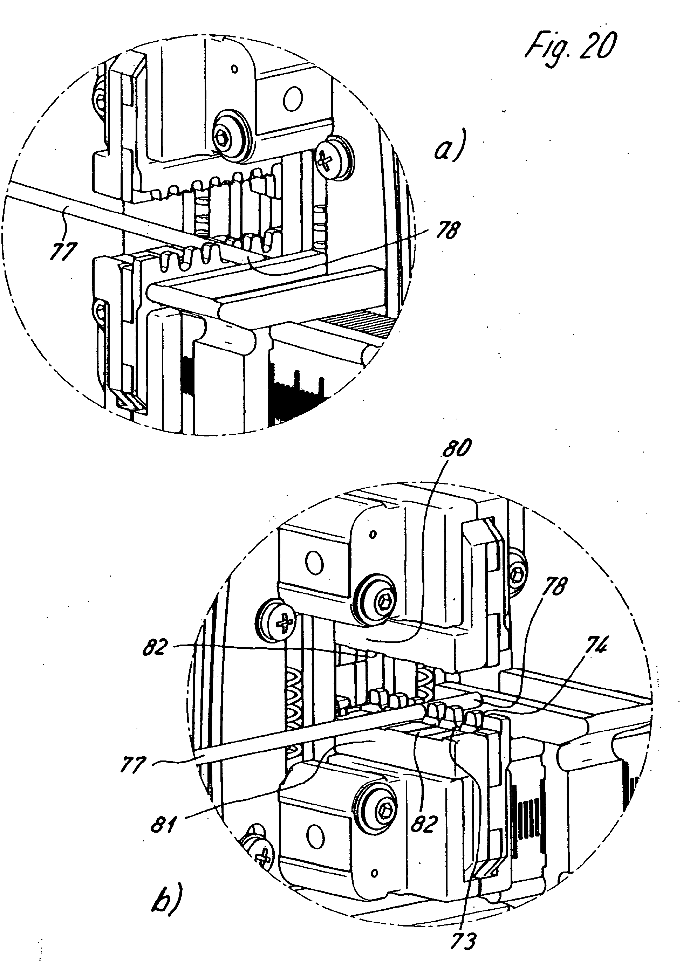

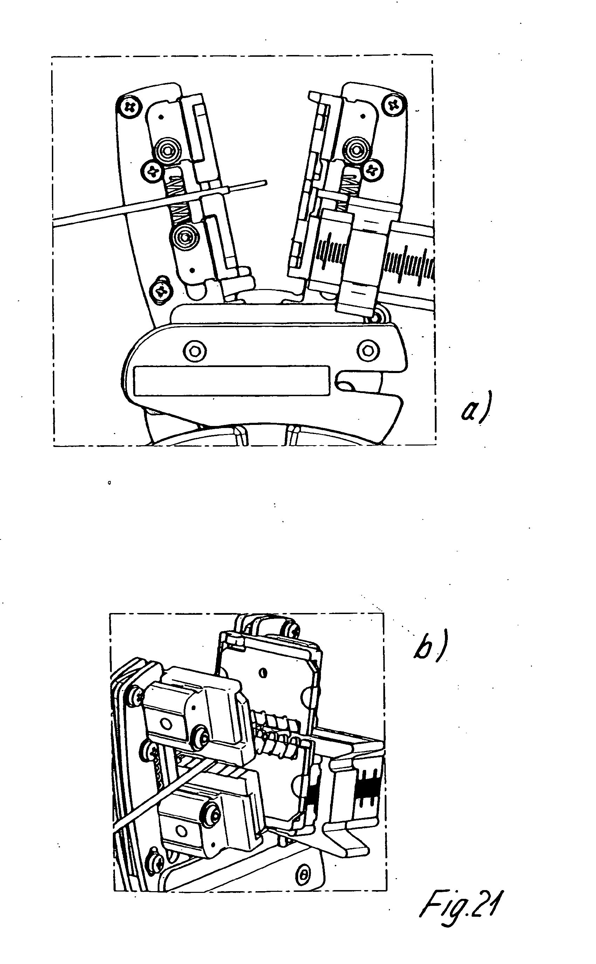

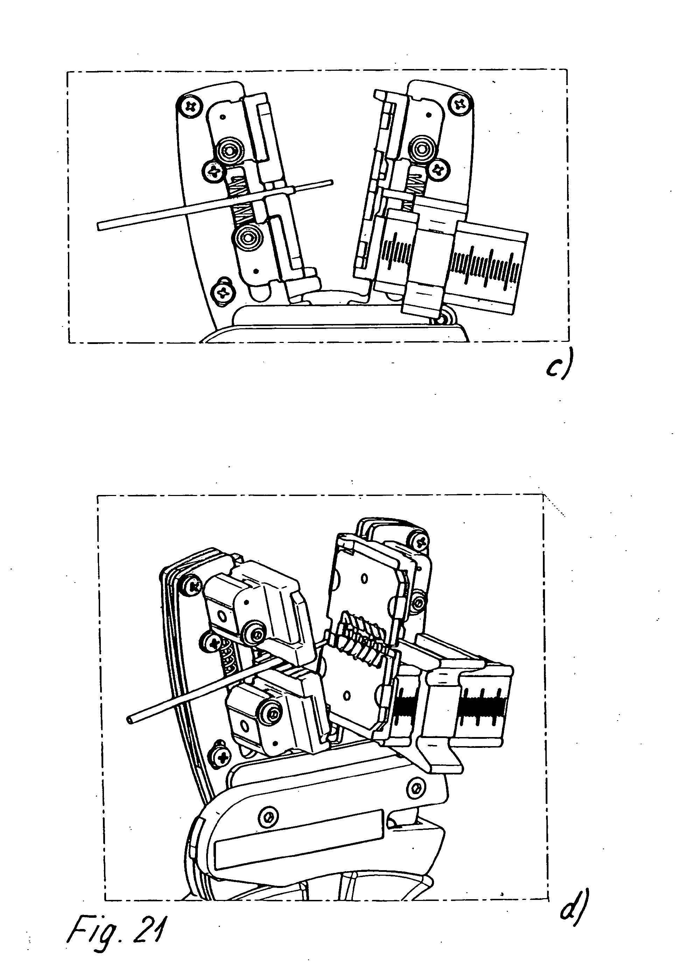

Fig. 18,19 zeigen eine weitere Abisolierzange in einer Seitenansicht in zwei Betätigungsstellungen während des Schneidvorganges (Fig. 18, 20a, 20b) und nach dem Abisolieren des Leiters 77 mit geöffneten Handhebeln 2, 3 (Fig. 19, 21 a-d).

Die mechanische und funktionelle Ausgestaltung dieser weiteren vorteilhaften Zange entspricht weitgehend der des Ausführungsbeispiels aus Fig. 1 bis 17. Unterschiede sind aber hinsichtlich der Ausgestaltung insbesondere der Schneidmesser gegeben.

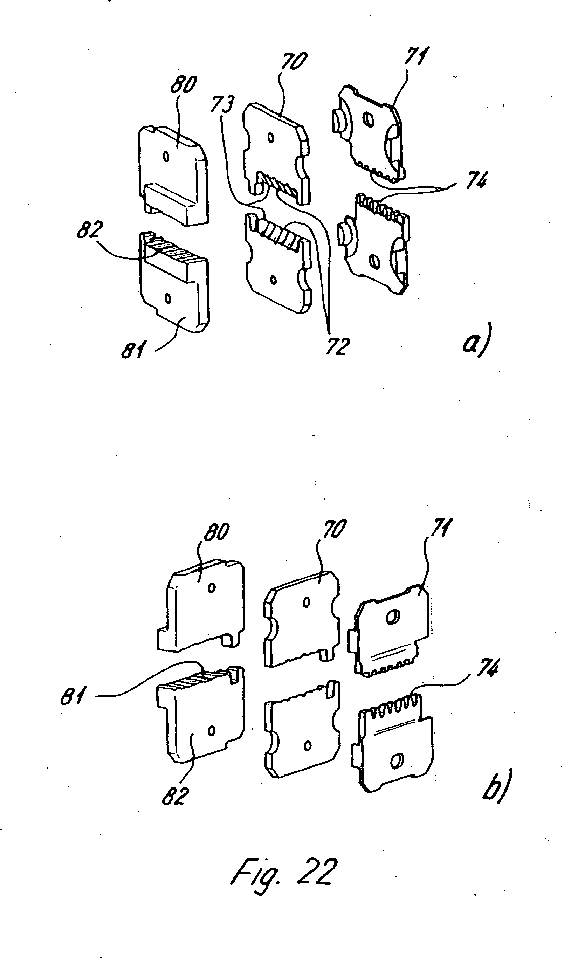

So weisen nach Fig. 18 bis 22 - siehe insbesondere Fig. 22 - wiederum vorzugsweise sowohl das obere als auch das untere Abisoliermesser 28, 38 des zweiten Klapphebels 20 zwei Blechlagen 70, 71 auf, von denen die eine die eigentlichen Schneidkante 72 mit mehreren nebeneinander liegender Ausnehmungen 73 für mehrere Leiter gleichen Durchmessers oder für Leiter verschiedenen Durchmessers (je nach Ausgestaltung) aufweist und die jeweils andere korrespondierende Ausnehmungen 74, die den Leiter führen und positionieren.

Die Ausnehmungen 73 an der Schneidkante sind vorzugsweise zumindest an ihrem Grund jeweils im wesentlichen halbkreisförmig ausgestaltet, so dass insbesondere ein dünner Leiter optimal geführt, festgelegt und geschnitten wird.

Wesentlich ist hier, dass die Blechlage 71 als Führungsplatte fungiert, welche direkt - quasi ohne Luftspalt - an der Schneidkante 72 des eigentlichen Abisoliermessers bzw. der Blechlage 70 mit der Schneidkante 72 anliegt. Hierdurch kann der Leiter beim Schneiden nicht ausweichen und wird optimal positioniert und präzise geschnitten. Fig. 18 zeigt zusätzlich einen Leiteranschlag 75 an der zweiten Klemmbacke mit den Schneidmessern 28, 38, die an einer Messskala 76 beweglich, insbesondere verschieblich angeordnet ist, so dass die Länge der vom Leiter 77 zu entfernenden Isolierung/Isolation 78 auf einfachste Weise einstellbar veränderlich ist.

Die obere und untere Klemmbacke 80, 81 in dem ersten Handhebel weisen keine den Leitern formschlüssig angepasste Kontur auf sondern im wesentlichen im Querschnitt rechtwinklige, flache Ausnehmungen oder Stufungen 82, die jeweils etwas breiter sind als der Durchmesser der abzuisolierenden Leiter 77, so dass diese vor dem Festklemmen etwas im Bereich der Klemmbacken beweglich sind und selbsttätig die jeweils optimale Klemmposition einnehmen bzw. finden.

### Bezugszeichen

- Abisolierzange: 1
- Handhebel: 2
- Handhebel: 3
- Basis: 4
- Blech: 5
- Blech: 6
- Bolzen: 7
- Distanzhülse: 8
- Griffabschnitt: 9
- Basisabschnitt: 10
- Griffschale: 11
- Lagerbuchse: 12
- Blech: 13
- Vorsprung: 14
- Seitenkante: 15
- Leiter: 16
- Isoliergehäuse: 17
- Leitungsader: 18
- Klapphebel: 19
- Klapphebel: 20
- Klapphebelblech: 21
- Klapphebelblech: 22
- Klapphebelblech: 23
- Klapphebelblech: 24
- Halter: 25
- erste Klemmbacke: 26
- Halter: 27
- Abisoliermesser: 28
- Langloch: 29
- Langloch: 30
- Halter: 31
- Halter: 32
- Schiebebolzen: 33
- Schiebebolzen: 34
- Schiebebolzen: 35
- Schiebebolzen: 36
- untere Klemmbacke: 37
- unteres Abisoliermesser: 38
- Schraubenfeder: 39
- Schraubenfeder: 40
- L-förmige Feder: 41
- L-förmige Feder: 42
- Exzenterstift: 43
- Exzenterstift: 44
- Steuerblech: 45
- Steuerblech: 46
- Ansatz: 47
- Ansatz: 48
- Druckfeder: 49
- Druckfeder: 50
- Ausleger: 51
- Steuerkurve: 52
- Steuerblech: 53
- Schneidevorrichtung: 54
- Schneidmesser: 55
- Langloch: 56
- Stift: 57
- freies Ende: 58
- Ausnehmung: 59
- Messerschlitz: 60
- Ausnehmung: 61
- Ausnehmung: 62
- Schneidkante: 63
- Lage: 64
- Lage: 65
- Befestigungsstück: 66
- Befestigungsstück: 67
- Bohrung: 68
- Schraube: 69
- Blechlagen: 70, 71
- Schneidkante: 72
- Ausnehmungen: 73, 74
- Leiteranschlag: 75
- Messskala: 76
- Leiter: 77
- Isolation: 78
- Klemmbacken: 80, 81
- Stufungen: 82

## Patentansprüche

1. Abisolierzange (1) mit
a. zwei Handhebeln (2, 3),
b. zwei an einer Basis (4) schwenkbar gelagerten Klapphebeln (19, 20),
c. wobei an einem der beiden Klapphebel (19, 20) ein Paar relativ zueinander beweglicher Abisoliermesser (28, 38) und an dem anderen Klapphebel (20) ein Paar relativ zueinander beweglicher Klemmbacken (26, 37) oder ein Paar weiterer Abisoliermesser angeordnet ist, und
d. wobei jeweils ein Abisoliermesser (38) bzw. eine Klemmbacke (37) jedes Paares in einem Langloch (29, 30) des jeweiligen Klapphebels (19, 20) verschieblich geführt ist,
**dadurch gekennzeichnet, dass**
e. jeweils das weitere Abisoliermesser (28) bzw. die korrespondierende Klemmbacke (26) an der Basis (4) - unter der Wirkung jeweils einer L-förmig ausgebildeten Feder (41, 42) - mit etwas Spiel an den Klapphebeln (19, 20) angeordnet sind, wobei das Spiel derart ausgelegt ist, dass Leitertoleranzen beim Klemmen eines Leiters (16) und/oder beim Abtrennen des Isolierungsendes (17) ausgleichbar sind,
f. wobei die Klapphebel (19, 20) jeweils aus einem vorderen Klapphebelblech (21, 22) und einem damit deckungsgleichen hinteren Klapphebelblech (23, 24) bestehen, zwischen denen ein Spalt ausgebildet ist,
g. wobei in den Spalt zwischen den Klapphebelblechen (21, 22 bzw. 23, 24) bewegliche Befestigungsstücke (66, 67) für die oberen Halter (25, 27) eingesetzt sind, an denen sich einerseits jeweils Federn - insbesondere Schraubenfedern (39, 40) - abstützen, welche einerseits die Klemmbacke (37) und das Abisoliermesser (38) in den Langlöchern (29, 30) in Richtung der weiteren Klemmbacke (37) bzw. des weiteren Abisoliermessers (38) drücken und an denen sich andererseits die L-förmigen Federn (41, 42) abstützen.

2. Abisolierzange (1) nach Anspruch 1, **dadurch gekennzeichnet, dass** der eine der Handhebel (2) unbeweglich direkt mit der Basis (4) verbunden und/oder ausgebildet ist, wohingegen der andere Handhebel (3) schwenkbar an der Basis (4) gelagert ist.

3. Abisolierzange (1) nach einem der vorstehenden Ansprüche, **dadurch gekennzeichnet, dass** an dem an der Basis (4) verschwenkbaren Handhebel (3) ein Vorsprung (14) ausgebildet ist, der auf eine steuerkurvenartige Kontur (15) einwirkt.

4. Abisolierzange (1) nach einem der vorstehenden Ansprüche, **dadurch gekennzeichnet, dass** die Befestigungsstücke (66, 67) zur Aufnahme der Halter (25, 27) der oberen Klemmbacke (26) bzw. des oberen Abisoliermessers (38) dienen.

5. Abisolierzange (1) nach einem der vorstehenden Ansprüche, **dadurch gekennzeichnet, dass** Bohrungen (68) in den Klapphebelblechen ausgebildet sind, welche einen etwas größeren Durchmesser als die Schrauben (69) aufweisen, so dass die oberen Halter (25, 27) und damit das obere Abisoliermesser (28) und die obere Klemmbacke (26) an den Klapphebeln (19, 20) jeweils begrenzt beweglich angeordnet sind.

6. Abisolierzange (1) nach einem der vorstehenden Ansprüche, **dadurch gekennzeichnet, dass** die Längsschenkel der L-förmigen Federn (41, 42) an den Außenseiten der Halter (25, 27) auf dem jeweiligen Klapphebelblech (21, 22) verlaufen und sich an verstellbaren Exzenterstiften (43, 44) abstützen, mit denen die Federvorspannung der L-förmigen Federn (41, 42) einstellbar ist.

7. Ablsolierzange (1) nach einem der vorstehenden Ansprüche, **dadurch gekennzeichnet, dass** zwischen die unteren Halter (31, 32) und die oder zwischen die Klapphebelbleche (21 -24) Steuerbleche (45, 46) gesetzt sind, welche sich zu den Handhebeln (2, 3) erstreckende, ineinandergreifende Ansätze (47, 48) aufweisen, wobei der Vorsprung (14) des schwenkbaren Handhebels (3) am unteren Steuerblech (45) anliegt.

8. Abisolierzange (1) nach einem der vorstehenden Ansprüche, **dadurch gekennzeichnet, dass** die Schneidmesser (28, 38) und die Klemmbacken (26, 37) mehrere Ausnehmungen (61a,61b, ..., 62a; 62b, ...) zur Aufnahme verschiedener Leiterdurchmesser aufweisen.

9. Abisolierzange (1) nach einem der vorstehenden Ansprüche, **dadurch gekennzeichnet, dass** die Ausnehmungen (61 a,61 b, ...; 62a; 62b, ...) halbkreisförmig ausgebildet sind.

10. Abisolierzange (1) nach einem der vorstehenden Ansprüche, **dadurch gekennzeichnet, dass** sich die Ausnehmungen (61a,61b, ...; 62a; 62b, ...) zumindest abschnittsweise spitzwinklig verjüngen.

11. Abisolierzange (1) nach einem der vorstehenden Ansprüche, **dadurch gekennzeichnet, dass** jedes oder wenigstens eins der Abisoliermesser (28, 38) mehrteilig aufgebaut ist und aus zwei Lagen (64, 65; 70, 71) besteht, von denen die eine die eigentliche Schneidkante (63, 72) aufweist und die andere als Führungsplatte ausgebildet ist, die mit korrespondierenden Ausnehmungen (62a', 62b'; 74) versehen ist, die den Leiter (77) führen und positionieren.

12. Abisolierzange (1) nach Anspruch 11, **dadurch gekennzeichnet, dass** die Führungsplatte bzw. die Blechlage (71) der Abisoliermesser (28, 38) direkt an der Schneidkante (72) der weiteren Blechlage (70) anliegt.

13. Abisolierzange (1) nach einem der vorstehenden Ansprüche 11 oder 12, **dadurch gekennzeichnet, dass** jede der Blechlagen (70, 71) mit mehreren der Ausnehmungen (73, 74) für die Leiter oder die Leiterisolierung versehen ist.

14. Abisolierzange (1) nach einem der vorstehenden Ansprüche, **dadurch gekennzeichnet, dass** an der Klemmbacke (21) mit den Schneidmessem ein einstellbarer Leiteranschlag (75) an einer Messskala (76) angeordnet ist.

15. Abisolierzange (1) nach einem der vorstehenden Ansprüche, **dadurch gekennzeichnet. dass** die Ausnehmungen (73, 74) in der ersten und zweiten Blechlage (70, 71) zumindest an ihrem Grund jeweils im wesentlichen halbkreisförmig ausgestaltet sind.

16. Abisolierzange (1) nach einem der vorstehenden Ansprüche, **dadurch gekennzeichnet, dass** die obere und untere Klemmbacke (80, 81) im wesentlichen im Querschnitt rechtwinklige flache Ausnehmungen (82) oder Stufungen, die jeweils etwas breiter sind als der Durchmesser der abzuisolierenden Leiter (77).

17. Abisolierzange (1) nach einem der vorstehenden Ansprüche, **gekennzeichnet durch** eine integrierte Schneidvorrichtung zum Abtrennen eines Leiterende mit Isolierung und Ader(n).

18. Abisolierzange (1) nach einem der vorstehenden Ansprüche, **dadurch gekennzeichnet, dass** die Schneidvorrichtung (54) ein Schneidmesser (55) aufweist, das gelenkig an der Basis (4) gelagert ist und an seinem einen Ende ein gekrümmtes Langloch (56) aufweist, in das ein Stift (57) am zweiten Handhebel 3 eingreift.

19. Abisolierzange (1) nach einem der vorstehenden Ansprüche, **dadurch gekennzeichnet, dass** in der Basis (4) eine seitliche Ausnehmung (59) zum Einlegen des Leiters (4) ausgebildet ist, in welche ein Messerschutz (60) eingesetzt ist.

## Claims

1. Stripping pliers, comprising
a) two hand levers (2, 3);
b) two flap levers (19, 20) which are pivotably mounted on a base (4),
c) wherein a pair of stripping blades (28, 38) movable relative to each other is arranged on one of the two flap levers (19, 20), and a pair of clamping jaws (26, 37) movable relative to each other or a pair of further stripping blades is arranged on the other flap lever (20), and
d) wherein one respective stripping blade (38) or a clamping jaw (37) of each pair is movably guided in a slot (29, 30) of the respective other flap lever (19, 20),
**characterized in that**
e) the respective further stripping blade (28) or the corresponding clamping jaw (26) on the base (4) are arranged with slight play on the flap levers (19, 20) under action of one respective L-shaped spring (41, 42), wherein the play is arranged in such a way that conductor tolerances can be compensated during the clamping of the conductor (16) and/or during the severing of the stripping end (17),
f) wherein the flap levers (19, 20) respectively consist of a front flap lever plate (21, 22) and a rear flap lever plate (23, 24) which is congruent therewith, between which a gap is formed,
g) wherein movable fastening elements (66, 67) for the upper retainers (25, 27) are inserted into the gap between the flap lever plates (21, 22 and 23, 24), on which respective springs, especially helical springs (39, 40), are supported, which press the clamping jaw (37) and the stripping blade (38) in the slots (29, 30) in the direction of the further clamping jaw (37) or the further stripping blade (38) on the one hand, and on which the L-shaped springs (41, 42) are supported on the other hand.

2. Stripping pliers (1) according to claim 1, **characterized in that** the one of the hand levers (2) is connected in a stationary manner directly to the base (4), whereas the other hand lever (3) is pivotably mounted on the base (4).

3. Stripping pliers (1) according to one of the preceding claims, **characterized in that** a projection (14) is arranged on the hand lever (3) that is pivotable on the base (4), which projection acts on a contour (15) similar to a control cam.

4. Stripping pliers (1) according to one of the preceding claims, **characterized in that** the fastening elements (66, 67) are used for accommodating the retainers (25, 27) of the upper clamping jaw (26) or the upper stripping blade (38).

5. Stripping pliers (1) according to one of the preceding claims, **characterized in that** boreholes (68) are formed in the flap lever plates, which boreholes have a slightly larger diameter than the screws (69), so that the upper retainers (25, 27) and thus the upper stripping blade (28) and the upper clamping jaw (26) are respectively arranged on the flap levers (19, 20) in a limited movable manner.

6. Stripping pliers (1) according to one of the preceding claims, **characterized in that** the longitudinal legs of the L-shaped springs (41, 42) extend on the exterior sides of the retainers (25, 27) on the respective flap lever plate (21, 22) and rest on adjustable eccentric pins (43, 44) with which the spring bias of the L-shaped springs (41, 42) is adjustable.

7. Stripping pliers (1) according to one of the preceding claims, **characterized in that** control plates (45, 46) are positioned between the bottom retainers (31, 32) and the, or between the, flap lever plates (21 to 24), which control plates comprise projections (47, 48) which extend to the hand levers (2, 3) and engage into each other, wherein the projection (14) of the pivotable hand lever (3) rests on the bottom control plate (45).

8. Stripping pliers (1) according to one of the preceding claims, **characterized in that** the stripping blades (28, 38) and the clamping jaws (26, 27) comprise several recesses (61 a, 61 b, ...; 62a, 62b, ...) for accommodating various conductor diameters.

9. Stripping pliers (1) according to one of the preceding claims, **characterized in that** the recesses (61 a, 61 b, ...; 62a, 62b, ...) are arranged in a semicircular fashion.

10. Stripping pliers (1) according to one of the preceding claims, **characterized in that** the recesses (61 a, 61 b, ...; 62a, 62b, ...) taper in an acute angle at least in sections.

11. Stripping pliers (1) according to one of the preceding claims, **characterized in that** each one or at least one of the stripping blades (28, 38) is arranged in several parts and consists of two layers (64, 65; 70, 71), of which the one comprises the actual cutting edge (63, 72) and the other is arranged as a guide plate which is provided with corresponding recesses (62a', 62b'; 74) which guide and position the conductor (77).

12. Stripping pliers (1) according to claim 11, **characterized in that** the guide plate or the plate layer (71) of the stripping blades (28, 38) rests directly on the cutting edge (72) of the further plate layer (70).

13. Stripping pliers (1) according to one of the preceding claims 11 or 12, **characterized in that** each of the plate layers (70, 71) is provided with several of the recesses (73, 74) for the conductors or the conductor insulation.

14. Stripping pliers (1) according to one of the preceding claims, **characterized in that** an adjustable conductor stop (75) is arranged on a measuring scale (76) on the clamping jaw (21) with the cutting blades.

15. Stripping pliers (1) according to one of the preceding claims, **characterized in that** the recesses (73, 74) are arranged in the first and second plate layer (70, 71) in a substantially semicircular manner at least in their base.

16. Stripping pliers (1) according to one of the preceding claims, **characterized in that** the upper and the bottom clamping jaw (80, 81) comprise flat recesses (82) or stepped portions which are substantially rectangular in the cross-section and which are respectively slightly wider than the diameter of the conductor (77) to be stripped.

17. Stripping pliers (1) according to one of the preceding claims, **characterized by** an integrated cutting apparatus for severing a conductor end with insulation and lead(s).

18. Stripping pliers (1) according to one of the preceding claims, **characterized in that** the cutting apparatus (54) comprises a stripping blade (55) which is mounted in an articulated manner on the base (4) and comprises a curved slot (56) at its one end, into which a pin (57) on the second hand lever (3) engages.

19. Stripping pliers (1) according to one of the preceding claims, **characterized in that** a lateral recess (59) for inserting the conductor (4) is arranged in the base (4), into which a blade guard (60) is inserted.

## Revendications

1. Pince à dénuder (1) comprenant
a. deux leviers à main (2, 3),
b. deux leviers rabattables (19, 20) montés de manière à pouvoir pivoter au niveau d'une base (4),
c. sachant qu'une paire de lames à dénuder (28, 38) mobiles l'une par rapport à l'autre est disposée au niveau d'un des deux leviers rabattables (19, 20) et qu'une paire de mâchoires de serrage (26, 37) mobiles l'une par rapport à l'autre ou une paire d'autres lames à dénuder est disposée au niveau de l'autre levier rabattable (20), et
d. sachant que respectivement une lame à dénuder (38) ou une mâchoire de serrage (37) de chaque paire est guidée de manière à pouvoir coulisser dans un trou oblong (29, 30) du levier rabattable (19, 20) respectif,
**caractérisée en ce que**
e. respectivement l'autre lame à dénuder (28) et/ou la mâchoire de serrage (26) correspondante sont disposées au niveau de la base (4) - sous l'action respectivement d'un ressort (41, 42) réalisé de manière à présenter une forme de L - avec un léger jeu au niveau des leviers rabattables (19, 20), sachant que le jeu est configuré de telle manière que des tolérances de conducteur lors du serrage d'un conducteur (16) et/ou lors du retrait de l'extrémité à dénuder (17) peuvent être compensées,
f. sachant que les leviers rabattables (19, 20) sont constitués respectivement d'une tôle de levier rabattable avant (21, 22) et d'une tôle de levier rabattable arrière (23, 24) coïncidant avec la première, entre lesquelles est réalisée une fente,
g. sachant que des pièces de fixation (66, 67) mobiles entre les tôles de levier rabattable (21, 22 ou 23, 24) pour les éléments d'appui supérieurs (25, 27) sont insérées dans la fente, au niveau desquelles s'appuient d'une part respectivement des ressorts - en particulier des ressorts hélicoïdaux (39, 40) - lesquels d'une part enfoncent la mâchoire de serrage (37) et la lame à dénuder (38) dans les trous oblongs (29, 30) en direction de l'autre mâchoire de serrage (37) ou de l'autre lame à dénuder (38), et au niveau desquelles s'appuient d'autre part les ressorts en forme de L (41, 42).

2. Pince à dénuder (1) selon la revendication 1, **caractérisée en ce que** l'un des leviers à main (2) est relié de manière immobile directement à la base (4) et/ou est réalisé de manière immobile, tandis que l'autre levier à main (3) est monté de manière à pouvoir pivoter au niveau de la base (4).

3. Pince à dénuder (1) selon l'une quelconque des revendications précédentes, **caractérisée en ce qu'**une partie faisant saillie (14) est réalisée au niveau du levier à main (3) pouvant pivoter au niveau de la base (4), laquelle partie faisant saillie agit sur un contour (15) de type came de commande.

4. Pince à dénuder (1) selon l'une quelconque des revendications précédentes, **caractérisée en ce que** les pièces de fixation (66, 67) servent à recevoir les éléments d'appui (25, 27) de la mâchoire de serrage supérieure (26) ou de la lame à dénuder supérieure (38).

5. Pince à dénuder (1) selon l'une quelconque des revendications précédentes, **caractérisée en ce que** des alésages (68) sont réalisés dans les tôles de levier rabattables, lesquels présentent un diamètre légèrement plus grand que les vis (69) de sorte que les éléments d'appui supérieurs (25, 27) et donc la lame à dénuder supérieure (28) et la mâchoire de serrage supérieure (26) sont disposés respectivement de manière à pouvoir être déplacés de manière limitée au niveau des leviers rabattables (19, 20).

6. Pince à dénuder (1) selon l'une quelconque des revendications précédentes, **caractérisée en ce que** les branches longitudinales des ressorts en forme de L (41, 42) s'étendent au niveau des côtés extérieurs des éléments d'appui (25, 27) sur la tôle de levier rabattable (21, 22) respective et s'appuient au niveau de tiges excentriques (43, 44) pouvant être déplacées, à l'aide desquelles la précontrainte de ressort des ressorts en forme de L (41, 42) peut être réglée.

7. Pince à dénuder (1) selon l'une quelconque des revendications précédentes, **caractérisée en ce que** des tôles de commande (45, 46) sont placées entre les éléments d'appui inférieurs (31, 32) ou entre les tôles de levier rabattable (21 - 24), lesquelles présentent des appendices (47, 48) s'engrenant les uns dans les autres, s'étendant en direction des leviers à main (2, 3), sachant que la partie faisant saillie (14) du levier à main (3) pouvant pivoter repose au niveau de la tôle de commande inférieure (45).

8. Pince à dénuder (1) selon l'une quelconque des revendications précédentes, **caractérisée en ce que** les lames de coupe (28, 38) et les mâchoires de serrage (26, 37) présentent plusieurs évidements (61 a, 61 b, ... 62a, 62b) servant à recevoir divers diamètres de conducteurs.

9. Pince à dénuder (1) selon l'une quelconque des revendications précédentes, **caractérisée en ce que** les évidements (61 a, 61 b, ... 62a, 62b) sont réalisés de manière à présenter une forme semi-circulaire.

10. Pince à dénuder (1) selon l'une quelconque des revendications précédentes, **caractérisée en ce que** les évidements (61 a, 61 b, ... 62a, 62b) se rétrécissent de manière à présenter un angle aigu au moins par endroits.

11. Pince à dénuder (1) selon l'une quelconque des revendications précédentes, **caractérisée en ce que** chaque lame à dénuder ou au moins une des lames à dénuder (28, 38) présente une structure en plusieurs parties et est constituée de deux couches (64, 65 ; 70, 71), parmi lesquelles l'une des couches présente l'arête de coupe (63, 72) en soi et l'autre couche est réalisée sous la forme d'une plaque de guidage, qui est pourvue d'évidements (62a', 62b' ; 74) correspondants, lesquels guident et positionnent le conducteur (77).

12. Pince à dénuder (1) selon la revendication 11, **caractérisée en ce que** la plaque de guidage ou la couche de tôle (71) des lames à dénuder (28, 38) repose directement au niveau de l'arête de coupe (72) de l'autre couche de tôle (70).

13. Pince à dénuder (1) selon l'une quelconque des revendications 11 ou 12, **caractérisée en ce que** chacune des couches de tôle (70, 71) est pourvue de plusieurs des évidements (73, 74) pour les conducteurs ou le dénudage de conducteur.

14. Pince à dénuder (1) selon l'une quelconque des revendications précédentes, **caractérisée en ce qu'**une butée de conducteur (75) réglable est disposée au niveau d'une graduation (76) au niveau de la mâchoire de serrage (21) pourvue de lames de coupe.

15. Pince à dénuder (1) selon l'une quelconque des revendications précédentes, **caractérisée en ce que** les évidements (73, 74) dans la première et dans la deuxième couche de tôle (70, 71) sont configurés au moins au niveau de leur fond respectivement de manière à présenter essentiellement une forme semi-circulaire.

16. Pince à dénuder (1) selon l'une quelconque des revendications précédentes, **caractérisée en ce que** la mâchoire de serrage supérieure et la mâchoire de serrage inférieure (80, 81) présentent des évidements (82) ou des paliers plats essentiellement de section transversale rectangulaire, lesquels sont respectivement légèrement plus larges que le diamètre des conducteurs (77) à dénuder.

17. Pince à dénuder (1) selon l'une quelconque des revendications précédentes, **caractérisée par** un dispositif de coupe intégré servant à retirer une extrémité de conducteur pourvue d'une isolation et d'un ou de brins.

18. Pince à dénuder (1) selon l'une quelconque des revendications précédentes, **caractérisée en ce que** le dispositif de coupe (54) présente une lame de coupe (55), qui est montée de manière articulée au niveau de la base (4) et qui présente, au niveau d'une de ses extrémités, un trou oblong (56) incurvé, avec lequel une tige (57) au niveau du deuxième levier à main (3) vient en prise.

19. Pince à dénuder (1) selon l'une quelconque des revendications précédentes, **caractérisée en ce qu'**un évidement (59) latéral servant à insérer le conducteur (4) est réalisé dans la base (4), dans lequel est insérée une protection de lame (60).
